# FASCICULE DE BREVET EUROPEEN

(11) **EP 0 588 695 B1**
(45) Date de publication et mention de la délivrance du brevet: **27.05.1998**
(21) Numéro de dépôt: 93402201.3
(22) Date de dépôt: 09.09.1993
(51) Int. Cl.: G06K 13/06, G07B 1/00, H04N 1/028

(54) **Dispositif perfectionné d'analyse de supports d'informations**
Verbesserte Vorrichtung zur Analyse von Informationsträgern
Improved device for the analysis of information supports

(30) Priorité: 17.09.1992 FR 9211112; 31.12.1992 FR 9216008; 13.01.1993 FR 9300215
(43) Date de publication de la demande: 23.03.1994
(73) Titulaire: INTERNATIONALE DES JEUX, F-92643 Boulogne Billancourt Cédex (FR)
(72) Inventeur: Bertrand, Dominique, F-75017 Paris (FR); Gatto, Jean-Marie, F-75016 Paris (FR)
(74) Mandataire: Obolensky, Michel

(56) Documents cités:
- EP-A- 0 261 761
- EP-A- 0 440 026
- EP-A- 0 465 768
- US-A- 4 036 430
- US-A- 4 684 792
- US-A- 5 038 027
- US-A- 5 153 750
- PATENT ABSTRACTS OF JAPAN vol. 12, no. 146 (E-605)6 Mai 1988 & JP-A-62 252 563 (NEC CORP) 14 Novembre 1987

## Description

La présente invention est relative aux dispositifs d'analyse de documents et concerne plus particulièrement mais non exclusivement les dispositifs d'analyse de bulletins de jeux ou de reçus délivrés aux joueurs à titre de justificatifs des bulletins de jeu qu'ils ont présentés et aux montants des enjeux qu'ils ont versés.

Certains jeux, notamment des jeux de loterie consistent à faire remplir par le joueur un bulletin comprenant une grille formée de cases dans lesquelles le joueur place des signes pour former une combinaison sur laquelle il parie.

Ces bulletins de jeux sont remis par les joueurs à des bureaux de jeu équipés de terminaux et des reçus leur sont délivrés en contre-partie des bulletins, ainsi que de l'acquittement d'un enjeu correspondant.

Les terminaux de jeu sont généralement équipés de dispositifs d'analyse ou lecteurs de bulletins et de reçus qui permettent l'élaboration de signaux codés transmis à une unité centrale dans laquelle les jeux des joueurs sont mis en mémoire jusqu'au tirage.

De tels dispositifs d'analyse sont divulgués par exemple dans US-A-4 684 792 et EP-A-0 261 761. Toutefois aucun de ces dispositifs ne possèdent de moyens pour appliquer une pression entre le rouleau d'entrainement et le détecteur d'images. Le dispositif de US-A-4 684 792 correspond au préambule de la revendication 1.

L'invention vise à perfectionner les dispositifs d'analyse de documents en vue d'assurer la présentation et le défilement de ceux-ci dans les meilleurs conditions afin d'en assurer une lecture fiable.

Elle a donc pour objet un dispositif d'analyse de support d'informations, notamment de bulletins ou de reçus de jeux, tel que défini dans la revendication 1.

L'invention sera mieux comprise à l'aide de la description qui va suivre, donnée uniquement à titre d'exemple et faite en se référant aux dessins annexés, sur lesquels :
- la Fig.1 est une vue en perspective éclatée du dispositif d'analyse de supports d'informations suivant l'invention;
- la Fig.2 est une vue en perspective éclatée d'un détail du dispositif de la Fig.1;
- la Fig.3 est une vue en coupe transversale du boîtier du dispositif d'analyse suivant l'invention, dont certaines pièces ont été enlevées;
- la Fig.4 est une vue en coupe transversale du dispositif assemblé;
- la Fig.5 est une vue en coupe à plus grande échelle d'une variante du volet de guidage et de réception de documents;
- la Fig.6 est une vue partielle en coupe à plus grande échelle du dispositif détecteur d'images et du rouleau d'entraînement de documents qui font partie du dispositif de la Fig.1;
- la Fig.7 est une vue en coupe à plus grande échelle semblable à celle de la Fig.6 montrant une variante du dispositif anti-encrassement suivant l'invention;
- la Fig.8 est une vue en plan du dispositif anti-encrassement équipant le détecteur d'images de la Fig.7;
- la Fig.9 est une vue en coupe transversale à plus grande échelle d'un autre mode de réalisation du dispositif anti-encrassement suivant l'invention;
- la Fig.10 est une vue en coupe à plus grande échelle d'un écran de dispositif détecteur d'images qui présente un autre type de dispositif anti-encrassement suivant l'invention;
- la Fig.11 est une vue en coupe à plus grande échelle du dispositif anti-encrassement de l'écran du détecteur d'images du dispositif d'analyse de la Fig.1;
- la Fig.12 est une vue partielle en coupe transversale d'un dispositif d'analyse de supports d'information faisant partie d'un terminal de jeux et qui comporte un détecteur d'images équipé d'un dispositif de protection contre les poussières suivant l'invention;
- la Fig.13 est une vue à plus grande échelle, en coupe transversale du dispositif de protection suivant l'invention;
- la Fig.14 est une vue de côté suivant la flèche 14 de la Fig.13 du dispositif de protection de la Fig.13;
- la Fig.15 est une vue suivant la flèche 15 de la Fig.13 du dispositif de la Fig.14;
- la Fig.16 est une coupe à plus grande échelle suivant la ligne 16-16 de la Fig.15 montrant le profil d'une ailette du dispositif; et
- la Fig.16A est une vue en coupe correspondant à celle de la Fig.16 montrant une variante du profil des ailettes.

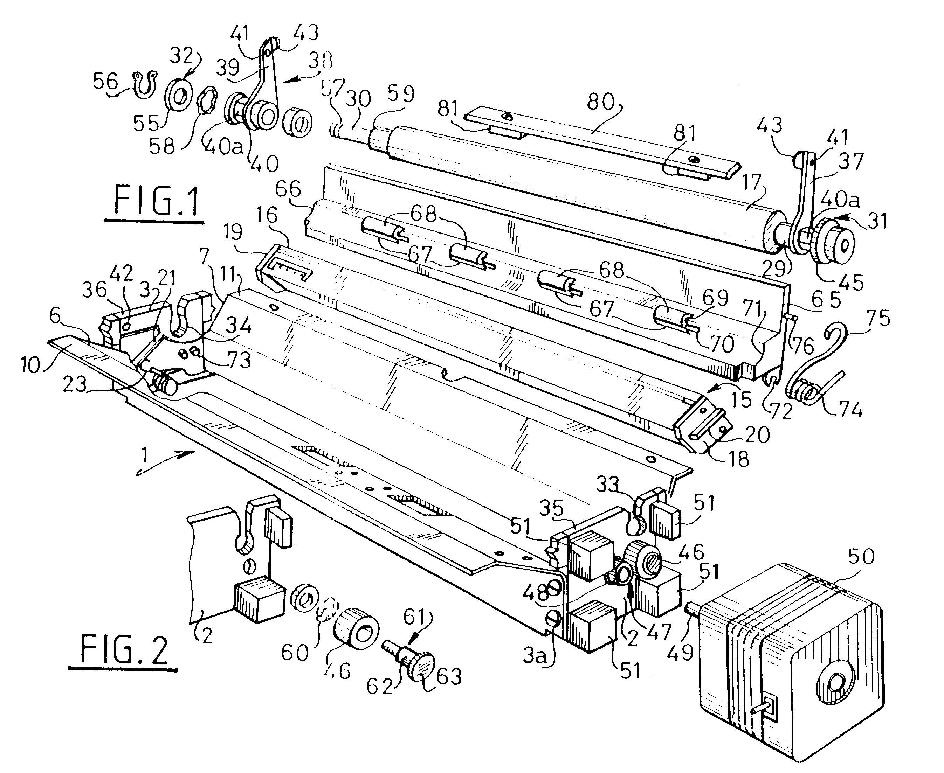

Le dispositif d'analyse de supports d'informations ou documents représenté à la Fig.1, comporte un boîtier 1 en forme de canal de section générale en U à bords évasés, réalisé en tôle métallique et fermé à ses extrémités par des flasques 2 et 3 en matière plastique par exemple fixés au boîtier 1 par exemple par des vis 3a.

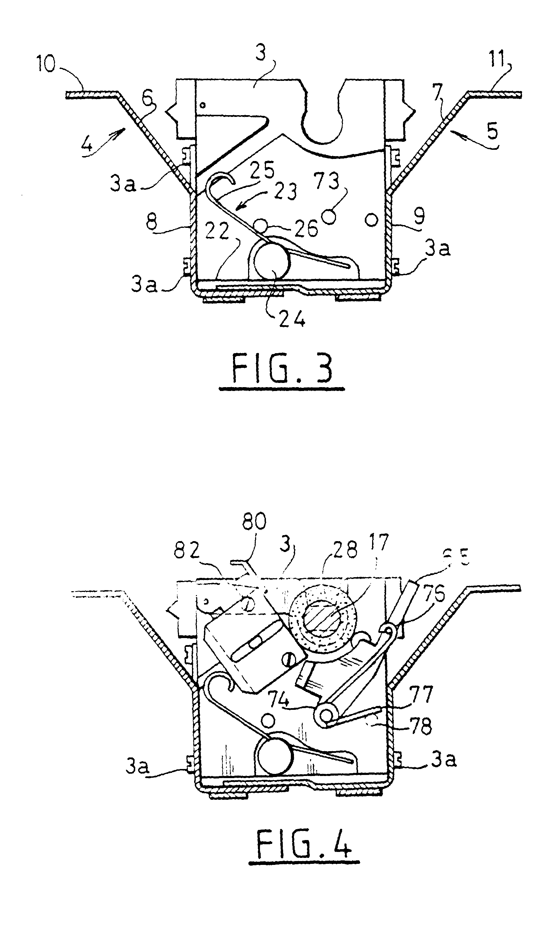

Les bords évasés 4 et 5 du boîtier 1 comportent ainsi qu'on le voit clairement à la Fig.3, des portions inclinées 6,7 prolongeant chacune une aile verticale 8,9 du boîtier et des rebords horizontaux 10,11.

Cette forme évasée du boîtier 1 facilite le montage du dispositif dans un ensemble plus important tel que par exemple un terminal de jeu ou autre.

Dans le boîtier ainsi constitué, est disposé un détecteur d'images 15 de forme parallélépipédique allongée s'étendant sur toute la longueur du boîtier et constitué d'une source de lumière linéaire (non représentée), des moyens de focalisation de la lumière émise par la source sur une paroi transparente 16 située en regard d'un rouleau 17 d'entraînement de documents et des éléments photo-sensibles (non représentés) de détection des faisceaux lumineux provenant de la source linéaire lorsqu'ils sont réfléchis par un document placé entre la paroi transparente 16 et le rouleau 17.

Le détecteur d'images 15 comporte à ses extrémités des plaques de montage 18,19 qui, comme on le voit sur la plaque 18, comportent chacune une saillie 20, coopérant avec une rainure inclinée ménagée dans chacune des flasques d'extrémité 2,3 du boîtier et dont seule la rainure 21 du flasque 3 est visible, pour permettre le montage du détecteur d'images 15 dans le boîtier 1.

Ainsi qu'on le voit bien à la Fig.3, à la partie inférieure de chaque flasque 2,3 d'extrémité du boîtier, à proximité du fond 22 est fixé un ressort en épingle 23 monté sur un ergot 24 solidaire du flasque 3 correspondant et comportant une branche 25 recourbée maintenue en butée contre un pion 26 et destiné à venir en contact avec un bord de la plaque 19 correspondante de montage du détecteur d'images 15 pour assurer ainsi une suspension ou un montage flottant du détecteur 15 dans le boîtier 1.

Le détecteur d'images 15 est maintenu en place dans le boîtier par le rouleau d'entraînement 17, dont la périphérie est revêtue, comme connu en soi d'une couche de caoutchouc cellulaire 28 ou analogue.

A chacune de ses extrémités, le rouleau 17 comporte des axes 29,30 pourvus de paliers correspondants 31,32 destinés à être reçus dans des encoches respectives 33,34 ménagées dans les bords supérieurs 35,36 des flasques 2 et 3 d'extrémité du boîtier 1.

Les paliers 31,32 sont pourvus chacun d'un verrou 37,38 d'immobilisation du rouleau 17 par rapport au boîtier 1.

Ces verrous sont identiques, de sorte que seul le plus visible sur le dessin, à savoir le verrou 38 va être décrit.

Il comporte une tige 39 solidaire d'un moyeu 40 formant l'une des pièces du palier correspondant et pourvu de méplats 40a d'engagement des paliers dans les encoches correspondants 33,34 des flasques 2,3 lorsque les verrous sont en position de déverrouillage.

A l'extrémité de la tige 39 opposée au moyeu est prévu un trou 41 qui coopère avec un téton de blocage 42 prévu sur le flasque d'extrémité correspondant du boîtier 1.

Le verrouillage est assuré, après mise en place des extrémités du rouleau 17 dans les encoches 33,34 correspondantes du boîtier 1 par rotation des verrous 37,38 et engagement des tétons de blocage tels que le téton 42 dans les trous correspondants tels que le trou 41 des verrous.

L'élasticité des verrous 37,38 permet une légère déformation de ceux-ci vers l'intérieur du boîtier pour permettre leurs engagements sur les tétons de blocage 42.

Une languette 43 prévue à l'extrémité de chaque verrou permet de faciliter sa manoeuvre de déblocage en vue du dégagement du rouleau 17.

Comme représenté à la Fig.4, lorsque le rouleau 17 est en place dans le boîtier 1, il prend appui contre la face transparente 16 du détecteur d'image 15 et provoque la mise sous tension des ressorts de suspension du détecteur d'image qui appliquent ainsi en permanence le détecteur 15 contre le rouleau 17 grâce au montage coulissant du détecteur 15 dans les rainures de guidage inclinées 21 du boîtier.

On obtient ainsi un contact permanent entre le détecteur et le rouleau, que ce soit en présence d'un document à analyser interposé entre ces deux éléments ou à vide.

L'axe d'extrémité 29 du rouleau 17 porte un pignon 45 d'entraînement en rotation du rouleau qui engrène avec le pignon de sortie 46 d'un réducteur 47 à deux pignons 46 et 48 montés à rotation sur des axes fixés aux flasques 2 du boîtier 1. Le pignon d'entrée 48 du réducteur est calé sur l'arbre de sortie 49 d'un moteur électrique pas à pas 50 d'entraînement du rouleau fixé aux flasques 2 par l'intermédiaire d'entretoises 51 venues de matière qui ménagent entre elles un espace suffisant pour loger des pignons du réducteur 47.

Le palier 32 monté à l'extrémité du rouleau 17 opposé au pignon d'entraînement 45, comporte interposé entre la pièce 40 formant moyeu pour le verrou 38 et une rondelle 55 prenant appui sur un circlips 56 engagé dans une rainure d'extrémité 57 de l'axe 30 du rouleau 17, une rondelle ondulée 58 dont l'élasticité assure un montage serré du palier 32 contre un épaulement correspondant 59 de l'axe 30 du rouleau, le palier 32 formant ainsi un frein destiné à amortir les vibrations dues à l'entraînement pas à pas du rouleau 17 transmises au rouleau 17 par le pignon d'entraînement 45 de celui-ci.

D'une manière analogue, ainsi qu'on l'a représenté à la Fig.2, le pignon de sortie 46 du réducteur 47 est également monté sur son axe par l'intermédiaire d'une rondelle ondulée 60, l'axe du pignon 46 étant constitué par une tige filetée 61 comportant une partie lisse 62 de réception du pignon 46 et une tête 63 de retenue axiale de ce pignon.

Lorsque la tige filetée 61 est vissée dans un trou taraudé correspondant ménagé dans le flasque 2 du boîtier 1, la rondelle ondulée 60 est comprimée et assure le freinage en rotation du pignon 46 et ainsi l'amortissement des vibrations qui lui sont transmises par le moteur pas à pas 50.

Dans le boîtier est en outre disposé un volet oscillant 65 de réception des documents après leur lecture par le dispositif. Le volet oscillant 65 présente un profil à peu près en forme d'équerre et s'étend lui aussi sur toute la longueur du boîtier entre les flasques 2 et 3 de celui-ci. Il comporte une surépaisseur longitudinale 66 dans laquelle sont ménagés des logements 67 de réception de galets 68 montés à rotation sur des axes 69 engagés de façon amovible par encliquetage dans des fentes 70 prévues de part et d'autre des logements 67. Les galets 68 sont au nombre de quatre et sont régulièrement répartis sur la longueur du volet oscillant 65.

La surépaisseur longitudinale 66 du volet oscillant 65 présente une face concave 71 en forme de portion de cylindre coaxiale au rouleau 17 pour favoriser le passage des documents.

Le volet 65 est monté oscillant sur les flasques d'extrémité 2 et 3 du boîtier 1, par l'intermédiaire de fourches 72 qui coopèrent chacune avec un axe 73 que l'on aperçoit sur le flasque 3, tourné vers l'intérieur du boîtier 1. Le volet 65 est maintenu en position par des ressorts en épingle 74 dont une branche 75 est recourbée et accrochée sur un ergot 76 prévu sur le bord d'extrémité du volet et dont l'extrémité opposée 77 est droite et vient en butée avec un pion tel que 78 disposé à côté de l'axe 73 sur le flasque 3 du boîtier 1.

Ainsi les ressorts 74 assurent l'application permanente des galets 68 contre le rouleau 17.

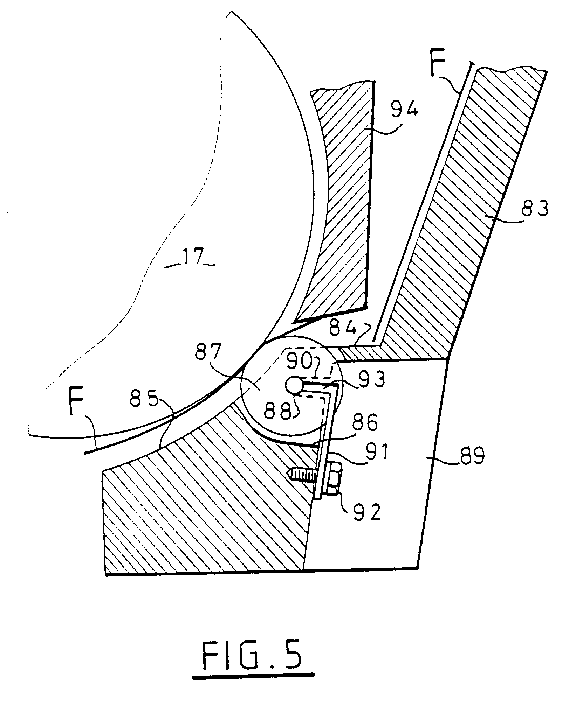

Les galets 68 ont pour rôle d'une part d'accompagner les documents entraînés par le rouleau 17, jusqu'au bord arrière du document et d'autre part, lorsqu'un document est libéré par le rouleau 17, de le ramener contre le volet en coopération avce une butée qui sera décrite en référence à la Fig.5.

Bien entendu, les éléments correspondants sont prévus sur le flasque 2 pour assurer le montage oscillant du volent 65 à ses deux extrémités.

Ainsi qu'on peut le voir à la Fig.4, le dispositif est complété par un guide 80 fixé par des entretoises 81 (Fig.1) dans le boîtier 1 et qui est destiné à faciliter l'introduction des documents entre le rouleau 17 et le détecteur d'images 15.

Des capteurs 82, par exemple des capteurs à infrarouges sont en outre disposés le long du guide 80 pour détecter la présence d'un document à l'entrée du dispositif.

De façon avantageuse, ces capteurs sont au nombre de deux et leur distance est prévue de manière à permettre de déterminer la nature du document présenté au dispositif selon la largeur de ce document.

Un tel agencement est décrit dans la demande de brevet français n° 92 10 642 déposée le 7 septembre 1992 par la Demanderesse et intitulée " Dispositif d'analyse de supports d'informations, notamment de bulletins de jeu ".

Au lieu d'être monté oscillant, le volet de guidage et de réception des supports d'informations peut être monté fixe dans le boîtier du dispositif et les galets qu'il porte peuvent être appliqués, contre le rouleau 17 par des organes élastiques.

Une telle variante est représentée à la Fig.5.

Selon cette variante, le volet de guidage 83 fixé dans le boîtier (non représenté) du dispositif comporte comme le volet oscillant 65 de la Fig.1, une surépaisseur 84 ayant une face concave 85 en forme de portion de cylindre et dans cette surépaisseur des logements 86 pour des galets 87 dont le rôle est le même que celui des galets 68.

Les galets 87 sont montés chacun sur un axe 88.

Dans la face du volet 83 opposée à la surépaisseur 84 sont ménagés des évidements 89 prévus aux emplacements des galets 87 et débouchant dans les logements 86 correspndants.

Un axe 88 d'un galet 87 est engagé dans des gorges 90 creusées dans la paroi de fond de chaque évidement 89 de part et d'autre du logement 86 et appliqué au fond desdites gorges par un ressort à lame 91 fixé dans le fond de l'évidement par une vis 92 et ayant une branche 93 pliée à angle droit et ayant la forme d'une fourche, en contact avec les extrémités du galet 86 en saillie par rapport à celui-ci.

Ainsi, chaque galet 86 est sollicité par son ressort 91 en position sortie par rapport à la face incurvée 85 et par conséquent contre le rouleau 17.

Enfin, sur la Fig.5, on a représenté une butée 94 qui peut également être prévue dans le mode de réalisation de la Fig.1 et qui sert en coopération avec les galets 87 à permettre l'empilage des feuilles F de documents traités à mesure qu'ils sortent du dispositif.

A cet effet, la butée 94 comporte un bord incliné contre lequel les bords avant des feuilles F butent pour être ensuite poussées contre la pile de feuilles F déjà constituée contre le volet.

Le dispositif d'analyse de documents qui vient d'être décrit comporte également des moyens de traitement des informations lues par le détecteur d'images et des moyens de commande du moteur électrique pas à pas 50 pour permettre l'exploration du document par balayages successifs ligne après ligne.

Ces moyens qui ne font pas réellement partie de la présente invention, sont également décrits dans la demande de brevet précitée.

Dans le présent mode de réalisation, le dispositif selon l'invention étant essentiellement appliqué à l'analyse de bulletins et de reçus de jeux, le détecteur d'images 15 est constitué par un lecteur optique aveugle à au moins une couleur dans laquelle les informations fixes sont imprimées sur le document à examiner et sensible à d'autres couleurs afin de ne prendre en compte que les informations variables de jeux et les informations fixes de cadrage du document et de désignation du type de jeu auquel il appartient, imprimées dans ces autres couleurs.

Ce détecteur d'images est également décrit dans la demande de brevet français n° 92 10 642 citée plus haut.

On comprendra cependant que le dispositif d'analyse de supports d'informations suivant l'invention peut comporter un détecteur d'images de construction différente à condition toutefois qu'il soit de type linéaire permettant une exploration par défilement des documents qui lui sont soumis.

On peut par exemple envisager de substituer au détecteur d'images décrit plus haut, un analyseur à lecture globale, d'analyse case par case d'un document et de reconnaissance positive des signes portés par le document, tel que ceux utilisés par exemple par les appareils de télécopie.

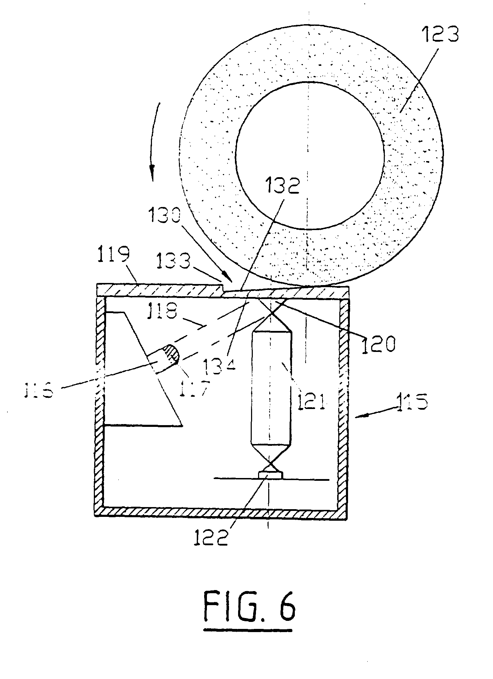

On va maintenant décrire en référence aux Fig.6 à 11, un dispositif d'analyse de supports d'informations dont le détecteur d'images est pourvu d'un dispositif anti-encrassement.

Selon ce mode de réalisation, le détecteur d'images désigné par la référence générale 115 est constitué comme représenté plus en détail à la Fig.6, d'une source de lumière comprenant des diodes électroluminescentes 116 auxquelles sont associés des organes 117 de focalisation et de filtrage de la lumière destinés à focaliser les faisceaux 118 sur une paroi transparente 119 ou écran du boîtier du détecteur contre laquelle doit être appliquée la face d'un document à analyser (non représenté).

En regard de la zone de focalisation 120 des faisceaux émis par les diodes électroluminescentes 116, sont disposés des conducteurs de lumière 121 de transmission des faisceaux vers des éléments photosensibles 122.

La paroi transparente 119 du détecteur d'images 115 et un rouleau 123 d'entraînement des documents correspondant au rouleau 17 de la Fig.1 sont en contact l'un avec l'autre dans une zone légèrement décalée par rapport aux axes optiques des conducteurs de lumière 121.

La paroi transparente 119 et la surface extérieure du rouleau 123 définissent ainsi un espace 130 en forme de coin qui facilite l'introduction des documents mais qui présente l'inconvénient d'accumuler des poussières pouvant tomber de l'extérieur du dispositif, par exemple en accompagnant les documents introduits dans celui-ci.

Par ailleurs, les documents traités viennent recevoir souvent de l'encre ou un autre produit qui risque de s'étaler sur la paroi transparente par frottement de celle-ci avec le document.

L'accumulation de poussière d'encre et autre dans l'espace 130 entraîne la formation d'un dépôt dans la zone de focalisation 120 de la lumière émise par les sources 116, détériorant ainsi les propriétés de transmission des images éclairées par les sources sur les documents analysés vers les éléments photosensibles 122 destinés à transformer ces images en signaux susceptibles d'être ensuite traités par des moyens numériques (non représentés).

Afin de remédier à cet inconvénient, la paroi transparente ou écran 119 du détecteur d'images 115 présente dans la région de la zone de focalisation 120, une découpe 132 en forme de gradin ménagée dans l'épaisseur de la matière de ladite paroi transparente.

La découpe 132 forme le long du rouleau d'entraînement 123, une rainure axiale qui présente une paroi 133 de forte pente et une paroi de faible pente 134 à peu près au milieu de laquelle se situe la zone de focalisation 120.

On voit donc que grâce à cet agencement, la paroi extérieure du rouleau 123 se trouve légèrement éloignée de la surface de la paroi transparente 119 dans la région de la zone de focalisation 120.

Ainsi, la poussière a moins tendance à s'accumuler dans cette zone et la transmission de la lumière provenant de source 116, vers les éléments photosensibles 122 s'en trouve améliorée.

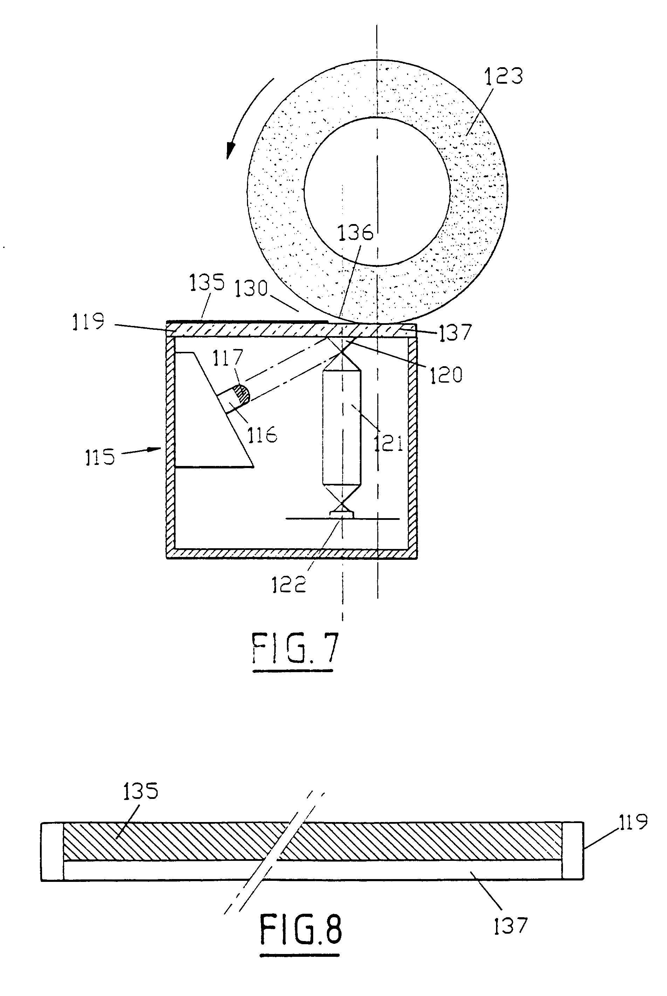

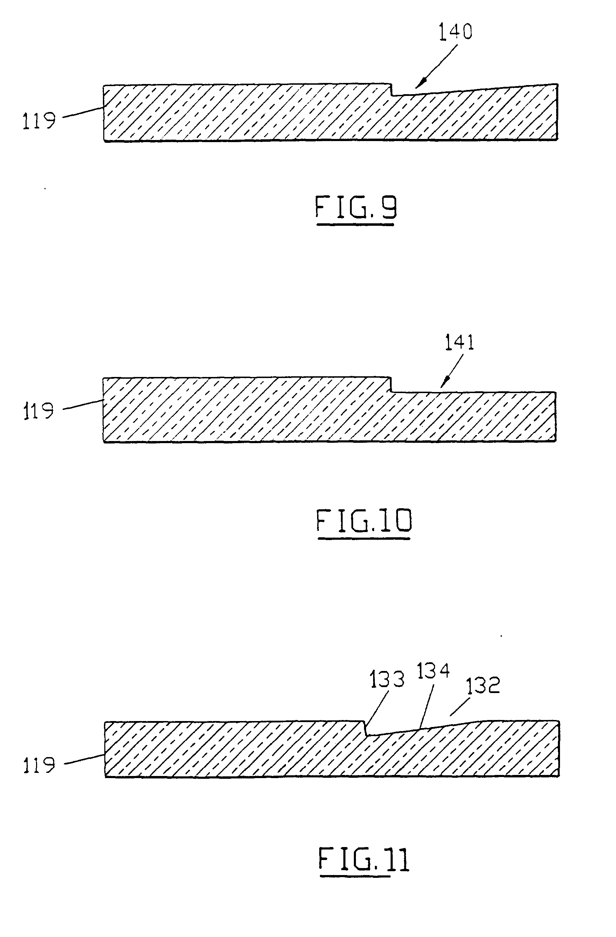

Sur les Fig.7 et 8, on a représenté un autre mode de réalisation de l'invention dans lequel la paroi transparente 119 du détecteur d'images 115 est recouverte d'un cache 135 de matière opaque qui forme également dans la région de la zone de focalisation 120 un gradin 136 avec la partie 137 de la surface non recouverte de la paroi transparente 119.

L'effet du gradin 136 obtenu par recouvrement d'une partie de la paroi transparente 119 par le cache opaque 135 est analogue à celui obtenu par le creusement de la rainure 132 du mode de réalisation décrit en référence à la Fig.6.

On voit en particulier sur la Fig.8, que l'écran 135 s'étend sur pratiquement toute la longueur de la paroi transparente 119 du dispositif détecteur 115.

Le mode de réalisation représenté aux Fig.7 et 8 dans lequel un cache opaque 135 est collé sur la surface de la paroi transparente 119 présente en outre l'avantage d'éviter que de la lumière parasite n'atteigne les éléments photosensibles 122. Ceci permet d'obtenir des signaux en provenance des documents à analyser plus précis.

Le cache 135 est fixé sur la paroi transparente par collage.

La Fig.9 est une vue en coupe à plus grande échelle d'un autre mode de réalisation de la paroi transparente 119 du dispositif détecteur d'images 115 de la Fig.6 dans laquelle une rainure longitudinale en forme de gradin 140 analogue à la rainure 132 du dispositif de la Fig.6 est ménagée le long de l'un des bords longitudinaux de la paroi 119.

La Fig.10 montre une paroi transparente analogue à celle de la Fig.9, le long de l'un des bords longitudinaux de laquelle est ménagé un gradin 141 à parois respectivement parallèles aux côtés et aux faces de la plaque 119 constituant la paroi transparente.

La Fig.11 est une vue à plus grande échelle de la paroi transparente du dispositif détecteur d'images représenté à la Fig.6, dont la rainure en gradin 132 est ménagée dans une zone intermédiaire de la surface de la paroi transparente 119 en contact avec le rouleau d'entraînement 123, le bord de faible pente 134 de ce gradin s'étendant de part et d'autre de la zone de focalisation 120 (Fig.6).

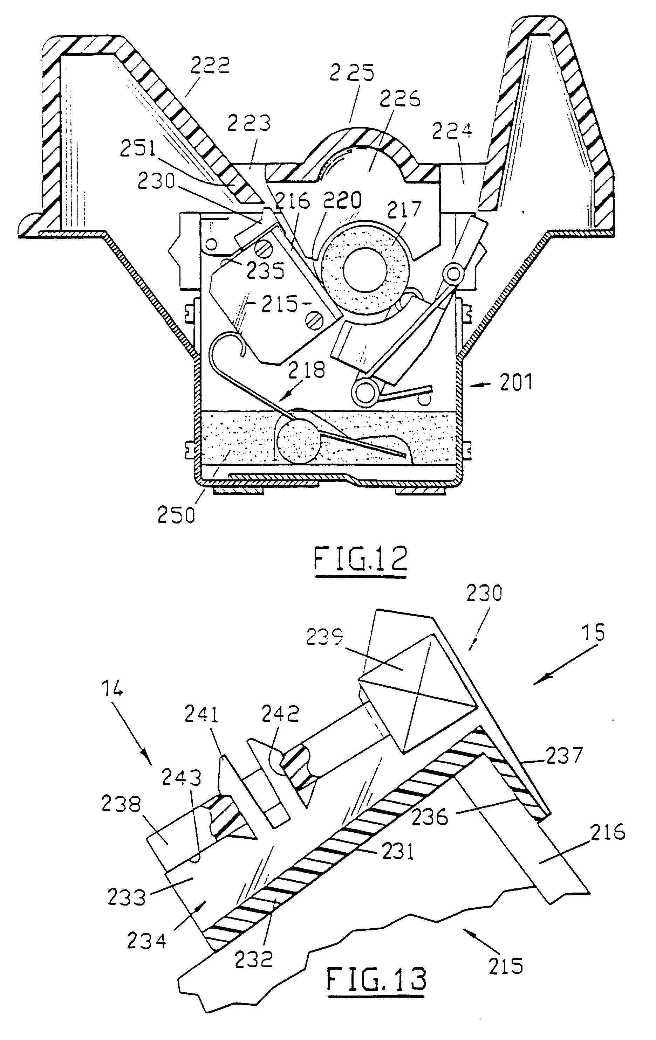

La description qui va suivre faite en référence aux Fig.12 à 16A se rapporte à un dispositif de protection contre la poussière et les particules extérieures pouvant équiper le détecteur d'images du dispositif d'analyse suivant l'invention.

En se référant à la Fig.12, on voit que l'invention est appliquée à un dispositif détecteur d'images qui fait partie d'un dispositif d'analyse de supports d'informations entrant dans la constitution d'un terminal de jeux tel que celui décrit dans la demande de brevet français n° 92 11 275 déposée le 22 septembre 1992 par la Demanderesse.

Ce détecteur d'images comporte une série de sources lumineuses, des moyens de focalisation de la lumière émise par les sources sur une paroi transparente 216 du boîtier du détecteur et des éléments photosensibles de réception des signaux émis par les sources lumineuses.

La paroi transparente 216 du détecteur 215 est en contact avec un rouleau 217 d'entraînement de documents.

Le détecteur d'images 215 est disposé dans le boîtier 201 de façon inclinée.

La paroi transparente 216 du détecteur d'images 215 et le rouleau 217 d'entraînement des documents sont en contact l'un avec l'autre et définissent ainsi un espace 220 en forme de coin qui facilite l'introduction de document mais qui présente l'inconvénient d'accumuler des poussières pouvant tomber de l'extérieur du dispositif par exemple en accompagnant les documents introduits dans celui-ci.

L'accumulation de poussières dans l'espace 220 entraîne un dépôt de celles-ci dans la zone de focalisation de la lumière émise par les sources du détecteur d'images, détériorant ainsi les propriétés de transmission des images éclairées par les sources sur les documents analysés vers les éléments sensibles du détecteur qui sont destinés à transformer les images en signaux susceptibles d'être ensuite traités par des moyens numériques (non représentés).

Dans le mode de réalisation représenté à la Fig.12, le dispositif d'analyse est protégé à sa partie supérieure par un cache 222 qui présente des fentes 223 et 224 pour l'entrée et la sortie des documents traités ainsi qu'une zone centrale 225 à partir de laquelle s'étendent des ailettes 226 régulièrement espacées. Les ailettes 226 ont un profil qui épouse la forme du rouleau d'entraînement 217 permettant d'éviter qu'un document acheminé par le rouleau 217 n'ait tendance à rebrousser chemin vers l'entrée du dispositif.

Sur le détecteur d'images 215 est monté, dans le prolongement de la fente d'entrée 223 du cache 222, un dispositif 230 de protection contre la poussière représenté plus en détail aux Fig.13 à 15.

Sur la Fig.13, on voit que le dispositif 230 de protection contre la poussière comprend un profilé 231 en équerre allongée dont une première aile 232 porte une série d'ailettes transversales 233 qui définissent des passages 234 destinés à favoriser la chute des particules de poussière qui pénètrent dans le dispositif de lecture de documents par l'entrée 223. La chute des particules de poussière dans les passages 234 se fait par gravité le long d'une paroi 235 du détecteur d'images perpendiculaire à sa paroi transparente 216.

Le profilé 232 comporte une autre aile 236 appliquée sur le bord de la paroi transparente 216 du détecteur d'images 215 et sur laquelle sont prévues des nervures 237 de hauteur décroissante entre l'entrée 223 du dispositif et la surface de la paroi transparente 216 du détecteur d'images, ces nervures qui prolongent chacune une ailette transversale 233 s'étendant parallélement à la direction de déplacement des documents et assurant le guidage des documents vers l'espace 220 ménagé entre la paroi transparente 216 et le rouleau d'entraînement 217.

Le dispositif de protection contre la poussière sert également de support pour un circuit imprimé 238 de détection de la présence d'un document qui porte des photodiodes 239,240 disposées à une distance déterminée l'une de l'autre pour détecter la présence d'un document présenté à l'entrée du dispositif.

La fixation du circuit imprimé 238 sur le dispositif 230 de protection contre les poussières est assurée par des doigts élastiques fendus 241 venus de matière avec des ailettes transversales 233 solidaires de l'aile 231 du profilé 230. Les doigts fendus 241 coopèrent par enclenchement avec des trous 242 ménagés dans le circuit imprimé 238.

Pour recevoir le circuit imprimé 238, les ailettes 233 comportent des découpes 243 qui constituent ensemble un logement pour le circuit imprimé.

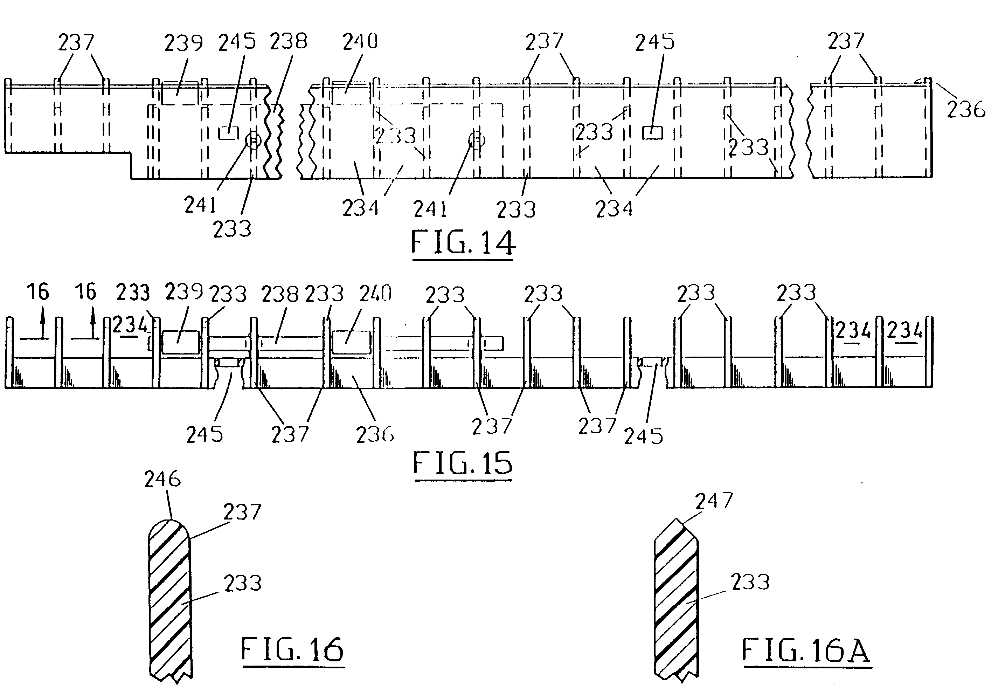

Les photodiodes 239 et 240 sont montées sur la tranche du circuit imprimé 238 et sont disposées chacune entre deux ailettes voisines 233 comme cela apparaît clairement à la Fig.15.

Le logement pour le circuit imprimé 238 défini par les découpes 243 des ailettes transversales 233, fait avec l'aile 231 du profilé 230, un angle précis permettant d'assurer un positionnement correct des diodes 239 par rapport à la direction de pénétration des documents dans le dispositif d'analyse.

Le dispositif de protection contre les poussières est fixé au boîtier du détecteur d'images 215 ou plus précisément à la paroi 235 de celui-ci par exemple au moyen d'agrafes (non représentées) et qui sont engagées dans des orifices 245 se trouvant en regard d'orifices correspondants prévus dans la paroi 235 du boîtier du détecteur d'images (non représenté).

Ainsi qu'on peut le voir en particulier à la Fig.16, les bords supérieurs des ailettes transversales 233 et des nervures 237 qui les prolongent, ont un profil 246 convexe incurvé, destiné à faciliter la chute des particules de poussière de part et d'autre de chacune des ailettes 233 dans les passages 234.

Selon la variante représentée à la Fig.16A, le profil convexe 247 des ailettes 233 est un profil à deux pentes permettant également de faciliter la chute des particules dans chaque passage 234 défini entre deux ailettes 233 voisines.

En se reportant à nouveau à la Fig.12, on voit que le fond du boîtier 201 du dispositif d'analyse de documents, est occupé par un corps 250 en mousse d'absorption des poussières et de liquides qui tombent le long du trajet défini par les passages 234 du dispositif de protection 230 après avoir contourné le boîtier du détecteur d'images 215.

Sur la Fig.12, on voit également que les parois du cache 222 qui définissent la fente 223 comportent un prolongement 251 qui s'étend à proximité immédiate du dispositif de protection 230, de sorte que les particules de poussière pénétrant dans l'entrée 223 sont acheminées directement dans les passages 234 ménagés entre les ailettes transversales 233 du dispositif de protection 230.

Grâce à un tel agencement, les particules de poussière n'atteignent pratiquement pas la paroi transparente 216 du détecteur d'images 215, de sorte que l'espace 220 entre cette paroi transparente et le rouleau d'entraînement 217 reste exempt de poussière, la transmission des données éclairées sur les documents traités par les sources lumineuses du détecteur d'images, s'en trouvant considérablement améliorée.

## Revendications

1. Dispositif d'analyse de support d'informations, notamment de bulletins ou de reçus de jeux comprenant des moyens d'introduction du support, des moyens de lecture des informations se trouvant sur le support, des moyens de traitement des informations lues sur le support en vue de leur conversion en données numériques et de leur transmission, les moyens de lecture comprenant un détecteur d'images (15;115;215) de forme allongée suspendu dans un boîtier (1,2,3;201) et présentant à ses extrémités des moyens de montage (20) coopérant avec des moyens de montage (21) complémentaires prévus dans les parois d'extrémité correspondantes (2,3) du boîtier, des moyens d'entraînement des supports d'informations devant le détecteur d'images, comprenant un rouleau (17) et un moteur électrique (50) de mise en rotation du rouleau, le dispositif étant caractérisé en ce que ledit rouleau (17;123;217) est monté dans les parois d'extrémité (2,3) du boîtier au moyen de verrous (37,38) et assure le maintien du détecteur d'images (15;115;215) dans ledit boîtier, et en ce que des organes élastiques (23) interposés entre le détecteur d'image (15) et le boîtier (22), assurent l'application d'une pression entre le détecteur d'images (15;115;215) et le rouleau aussi bien en présence d'un support d'informations entre le détecteur d'images (15;115;215) et le rouleau (17;123;217), que à vide.

2. Dispositif d'analyse suivant la revendication 1, caractérisé en ce que le boîtier du dispositif présente en section la forme d'un U évasé fermé à ses extrémités par des flasques (2,3) en matière plastique et en ce que le détecteur d'images (15) comporte à ses extrémités des plaques de montage (18,19) pourvues de nervures (20) coopérant avec des rainures inclinées (21) ménagées dans les flasques d'extrémité (2,3) du boîtier (1), les plaques de montage (18,19) et les rainures inclinées (21) constituant les moyens de montage complémentaires du détecteur d'images (15) dans le boîtier.

3. Dispositif d'analyse suivant la revendication 2, caractérisé en ce que le rouleau (17) d'entraînement des supports d'informations comporte à ses extrémités des axes (29,30) pourvus de paliers (31,32) dont font partie les verrous (37,38) et les flasques d'extrémité (2,3) du boîtier (1) comprennent des encoches (33,34) de réception des paliers (31,32) du rouleau et des moyens (42) de blocage des verrous (37,38) en position de verrouillage.

4. Dispositif d'analyse suivant l'une des revendications 2 et 3, caractérisé en ce que lesdits moyens élastiques d'application du détecteur d'images (15) contre le rouleau (17) sont des ressorts en épingles (23) montés sur des ergots (24) prévus sur les flasques d'extrémité (2,3) du boîtier et présentant chacun une branche (25) recourbée maintenue en butée contre un pion (26) solidaire d'un flasque correspondant, et destinée à venir en contact avec un bord de la plaque (18,19) correspondante de montage du détecteur d'images (15) pour assurer ainsi une suspension du détecteur (15) dans le boîtier (1).

5. Dispositif d'analyse suivant l'une des revendications 2 à 4, caractérisé en ce que l'un au moins des paliers (32) du rouleau (17) d'entraînement des supports d'informations comporte des moyens (58) formant frein destiné à amortir les vibrations auxquelles est soumis le rouleau (17) de la part des moyens d'entraînement (45,47,50).

6. Dispositif d'analyse suivant l'une des revendications 2 à 5, caractérisé en ce que chaque verrou (37,38) du rouleau (17) comporte une tige solidaire d'un moyeu (40) faisant partie intégrale du palier (31,32) correspondant, ladite tige (37,38) présentant à son extrémité libre des moyens de blocage (41) complémentaires des moyens de blocage (42) prévus sur les flasques d'extrémité (2,3) du boîtier, tandis que le moyeu (40) comporte des méplats (40a) d'introduction du moyeu dans l'encoche correspondante (33,34) dudit flasque, en position déverrouillée du verrou, les tiges des verrous présentant une élasticité permettant l'engagement et la libération des moyens de blocage complémentaires (41,42).

7. Dispositif d'analyse suivant les revendications 2 à 6, caractérisé en ce qu'il est en outre prévu un volet (65) monté dans le boîtier (1,2,3) et destiné au guidage et à la réception des supports d'informations pendant et après leur passage entre le rouleau (17) et le détecteur d'images (15), le volet comportant une surépaisseur longitudinale (66) présentant une face concave (71) en forme de portion de cylindre coaxiale au rouleau (17) et pourvue de logements (67) de réception de galets rotatifs régulièrement répartis sur sa longueur.

8. Dispositif d'analyse suivant la revendication 7, caractérisé en ce que le volet (65) est oscillant et en ce que les galets rotatifs (68) sont montés dans leurs logements (67) au moyen d'axes (69) engagés de façon amovible, par encliquetage dans des fentes (70) prévues de part et d'autre des logements (67).

9. Dispositif d'analyse suivant l'une des revendications 7 et 8, caractérisé en ce que le volet (65) est monté oscillant dans le boîtier (1,2,3) au moyen de fourches (72) coopérant avec des axes (73) prévus sur les flasques (2,3) d'extrémité du boîtier, avec interposition de ressorts de rappel (74) assurant l'application des galets (68) contre le rouleau (17) d'entraînement des supports d'informations.

10. Dispositif d'analyse suivant la revendication 7, caractérisé en ce que le volet (83) de guidage et de réception des supports d'informations est monté fixé dans le boîtier du dispositif et en ce que les galets rotatifs (87) sont montés dans leurs logements (86) et coopérent avec des organes élastiques (91) d'application desdits galets (87) contre le rouleau (17) d'entraînement des supports d'informations.

11. Dispositif d'analyse suivant l'une des revendications 7 à 10, caractérisé en ce que des moyens de butée (94) sont disposés au-dessus des galets (68;87) pour dévier les supports (F) d'information sortant du dispositif et assurer ainsi leur empilage contre le volet (65;83).

12. Dispositif d'analyse suivant l'une des revendications 2 à 11, caractérisé en ce que le moteur (50) de mise en rotation du rouleau d'entraînement (17) est un moteur pas à pas et est monté sur l'un des flasques d'extrémité (2) du boîtier (1,2,3), son arbre de sortie (49) étant relié à un pignon (45) solidaire du rouleau d'entraînement (17) par l'intermédiaire d'un réducteur (47) dont le pignon de sortie (46) comporte des moyens (60) formant frein d'amortissement des vibrations provenant du moteur électrique (50).

13. Dispositif d'analyse suivant l'une des revendications 1 à 12, dont le détecteur d'images (115) comporte un écran transparent (119) de transmission de la lumière d'une source lumineuse (117) entre un support d'informations éclairé par la source et un élément de lecture (122) recevant les images des informations portées par le support, l'écran étant en contact dans la zone de transmission de la lumière avec un organe (123) d'application du support d'informations contre ledit écran, la zone de contact entre l'organe d'application et l'écran formant une zone d'accumulation de poussière et d'étalement d'encre ou autre produit susceptible de faire obstacle à la transmission de la lumière vers l'élément de lecture (122), caractérisé en ce que sur la surface de l'écran (119) est ménagé un gradin (132;136;140;141) formant dispositif anti-encrassement contenant la zone de transmission de la lumière et situé devant la zone de contact entre l'écran et l'organe d'application dans le sens du déplacement du support d'informations.

14. Dispositif d'analyse suivant la revendication 13, caractérisé en ce que le gradin (132;140;141) est réalisé en ménageant une rainure dans l'épaisseur de la matière de l'écran.

15. Dispositif d'analyse suivant la revendication 14, caractérisé en ce que la rainure (132) présente un bord (133) de forte pente et un bord (134) de faible pente contenant la zone (120) de transmission de lumière.

16. Dispositif d'analyse suivant la revendication 15, caractérisé en ce que la rainure (132) est réalisée entre les bords longitudinaux de l'écran.

17. Dispositif d'analyse suivant la revendication 15, caractérisé en ce que la rainure (140) est réalisée le long d'un bord longitudinal de l'écran (119).

18. Dispositif d'analyse suivant la revendication 14, caractérisé en ce que le gradin (141) est réalisé en ménageant dans l'épaisseur du matériau de l'écran (119) une rainure à bords respectivement parallèles aux côtés et aux faces de l'écran.

19. Dispositif d'analyse suivant la revendication 13, caractérisé en ce que le gradin (136) est constitué par un cache opaque (135) fixé sur la face de l'écran (119) tournée vers l'organe (123) d'application du support d'informations contre ledit écran, ledit cache (135) laissant à découvert la zone (120) de transmission de la lumière et la zone de contact avec l'organe d'application (123).

20. Dispositif d'analyse suivant l'une des revendications 1 à 19, caractérisé en ce qu'il comporte un dispositif de protection contre la poussière et les particules extérieures pour la paroi transparente (216) du détecteur d'images (215), comprenant un organe (230) de guidage des supports d'information adaptable sur le boîtier du détecteur d'images (215), ledit organe de guidage comprenant une série de passages (234) disposés transversalement à la direction de déplacement des documents le long du boîtier du détecteur d'images (215) pour permettre la chute par gravité des particules de poussière le long du boîtier du détecteur d'images (215) avant qu'elles n'atteignent la paroi transparente (216) de celui-ci.

21. Dispositif d'analyse suivant la revendication 20, caractérisé en ce que le dispositif de protection comprend un profilé en équerre (231) dont une aile longitudinale (232) destinée à être appliquée contre une paroi (235) du détecteur d'images (215) voisine de sa paroi transparente (216) est pourvue d'ailettes transversales (233) qui définissent lesdits passages (34).

22. Dispositif d'analyse suivant la revendication 21, caractérisé en ce que l'autre aile (236) du profilé (231) destinée à être appliquée contre la paroi transparente (216) du détecteur d'image (215) comporte des nervures transversales inclinées (237) s'étendant parallèlement à la direction de déplacement des supports d'information pour assurer leur guidage, et prolongeant chacune une ailette transversale (233).

23. Dispositif d'analyse suivant l'une des revendications 21 et 22, caractérisé en ce que les ailettes transversales (233) qui définissent lesdits passages (234) comportent des découpes (243) pour constituer un logement pour un circuit imprimé (238) portant des organes (239,240) de détection de la présence de supports d'information, au moins deux ailettes transversales étant pourvues de moyens (242) de fixation du circuit imprimé, sur le dispositif.

24. Dispositif d'analyse suivant la revendication 23, caractérisé en ce que les moyens de fixation du circuit imprimé (238) comprennent des organes à enclenchement élastique (242) venus de matière avec la tranche des ailettes transversales correspondantes (233).

25. Dispositif d'analyse suivant l'une des revendications 22 à 24, caractérisé en ce que les tranches des nervures (237) de guidage des documents destinées à venir au contact avec les documents ont un profil (246; 247) convexe, arrondi ou à deux pentes, facilitant la chute des particules de poussière dans lesdits passages transversaux (234).

26. Dispositif d'analyse suivant l'une des revendications 20 à 25, caractérisé en ce qu'un tampon (250) d'absorption des poussières et des liquides est disposé au-dessous des passages transversaux (234) pour recueillir les poussières et les liquides tombant par lesdits passages.

## Patentansprüche

1. Vorrichtung zur Analyse von Informationsträgern, insbesondere Spielscheinen oder Spielempfangsbestätigungen, mit Einrichtungen zur Einführung des Trägers, Einrichtungen zum Lesen der auf dem Träger befindlichen Informationen und Einrichtungen zur Verarbeitung der auf dem Träger gelesenen Informationen zum Zweck ihrer Umwandlung in digitale Daten und ihrer Übertragung, wobei die Leseeinrichtungen einen Bildabtaster (15; 115; 215) mit langgestreckter Form aufweisen, der in einem Gehäuse (1, 2, 3; 201) aufgehängt ist und an seinen Enden Montageeinrichtungen (20) aufweist, die mit in den entsprechenden Stirnwänden (2, 3) des Gehäuses vorgesehenen, ergänzenden Montageeinrichtungen (21) zusammenwirken, sowie Einrichtungen zum Antrieb der Informationsträger vor dem Bildfühler, die eine Walze (17) und einen Elektromotor (50) zum Drehantrieb der Walze aufweisen, dadurch gekennzeichnet, daß die Walze (17; 123; 217) in den Stirnwänden (2, 3) des Gehäuses mit Hilfe von Riegeln (37, 38) montiert ist und den Halt des Bildabtasters (15; 115; 215) in dem Gehäuse gewährleistet und daß elastische Elemente (23), die zwischen den Bildabtaster (15) und das Gehäuse (22) eingesetzt sind, die Ausübung eines Drucks zwischen dem Bildabtaster (15; 115; 215) und der Walze sowohl bei Vorhandensein eines Informationsträgers zwischen dem Bildabtaster (15; 115; 215) und der Walze (17; 123; 217) als auch im Leerlauf gewährleisten.

2. Analysevorrichtung nach Anspruch 1, dadurch gekennzeichnet, daß das Gehäuse der Vorrichtung im Querschnitt die Form eines ausgeweiteten U's hat, das an seinen Enden durch Wangen (2,3) aus Kunststoff geschlossen ist, und daß der Bildfühler an seinen Enden Montageplatten (18, 19) aufweist, die mit Rippen (20) versehen sind, die mit in den Stirnwangen (2, 3) des Gehäuses (1) vorgesehenen, schrägen Nuten (21) zusammenwirken, wobei die Montageplatten (18, 19) und die schrägen Nuten (21) die ergänzenden Einrichtungen zur Montage des Bildabtasters (15) im Gehäuse bilden.

3. Analysevorrichtung nach Anspruch 2, dadurch gekennzeichnet, daß die Walze (17) zum Antrieb der Informationsträger an ihren Enden Achsen (29, 30) aufweist, die mit Lagern (31, 32) versehen sind, von denen die Riegel (37, 38) einen Teil bilden, und daß die Stirnwangen (2, 3) des Gehäuses (1) Ausschnitte (33, 34) zur Aufnahmen der Lager (31, 32) der Walze und Einrichtungen (42) zur Blockierung der Riegel (37, 38) in ihrer Verriegelungsstellung aufweisen.

4. Analysevorrichtung nach einem der Ansprüche 2 und 3, dadurch gekennzeichnet, daß die elastischen Einrichtungen zum Andrücken des Bildabtasters (15) an die Walze (17) Schnappfedern (23) sind, die auf Zapfen (24) montiert sind, die auf den Stirnwangen (2, 3) des Gehäuses vorgesehen sind, und jeweils einen gebogenen Schenkel (25) aufweisen, der an einem mit einer entsprechenden Wange fest verbundenen Vorsprung in Anschlag gehalten wird und dazu bestimmt ist, mit einem Rand der entsprechenden Montageplatte (18, 19) des Bildabtasters (15) in Kontakt zu kommen, um auf diese Weise eine Aufhängung des Abtasters (15) im Gehäuse (1) zu schaffen.

5. Analysevorrichtung nach einem der Ansprüche 2 bis 4, dadurch gekennzeichnet, daß mindestens eines der Lager (32) der Walze (17) zum Antrieb der Informationsträger eine eine Bremse bildende Einrichtung (58) aufweist, die dazu bestimmt ist, die Schwingungen zu dämpfen, denen die Walze (17) von Seiten der Antriebseinrichtungen (45, 47, 50) ausgesetzt ist.

6. Analysevorrichtung nach einem der Ansprüche 2 bis 5, dadurch gekennzeichnet, daß jeder Riegel (37, 38) der Walze (17) eine Stange aufweist, die mit einer Nabe (40) fest verbunden ist, die einen integrierenden Bestandteil des entsprechenden Lagers (31, 32) bildet, wobei diese Stange (37, 38) an ihrem freien Ende Blockiereinrichtungen (41) aufweist, die die auf den Stirnwangen (2, 3) des Gehäuses vorgesehenen Blockiereinrichtungen (42) ergänzen, während die Nabe (40) Abflachungen (40a) zur Einführung der Nabe in den entsprechenden Ausschnitt (33, 34) dieser Wange in der entriegelten Stellung des Riegels aufweist, wobei die Stangen der Riegel eine Elastizität aufweisen, die das Ein- und Ausrücken der ergänzenden Blockiereinrichtungen (41, 42) gestattet.

7. Analysevorrichtung nach den Ansprüche 2 bis 6, dadurch gekennzeichnet, daß außerdem ein Flügel (65) vorgesehen ist, der im Gehäuse (1, 2, 3) montiert ist und zur Führung und Aufnahme der Informationsträger während und nach ihrem Durchgang zwischen der Walze (17) und dem Bildabtaster (15) bestimmt ist und der eine Längsverdickung (66) mit einer konkaven Seite (71) in Form eines zur Walze (17) koaxialen Zylinderabschnitts aufweist, die mit Aussparungen (67) zur Aufnahme von drehbaren Rollen versehen ist, die auf ihrer Länge gleichmäßig verteilt angeordnet sind.

8. Analysevorrichtung nach Anspruch 7, dadurch gekennzeichnet, daß der Flügel (65) verschwenkbar ist und daß die drehbaren Rollen (68) in den sie aufnehmenden Aussparungen (67) mit Hilfe von Achsen (69) montiert sind, die abnehmbar durch Einrastung in zu beiden Seiten der Aussparungen (67) vorgesehene Schlitze (70) eingesteckt sind.

9. Analysevorrichtung nach einem der Ansprüche 7 und 8, dadurch gekennzeichnet, daß der Flügel (65) im Gehäuse (1, 2, 3) mit Hilfe von Gabeln (72) schwenkbar montiert ist, die mit auf den Stirnwangen (2, 3) des Gehäuses vorgesehenen Achsen (73) zusammenwirken, wobei Rückholfedern (74) dazwischengesetzt sind, die die Rollen (68) an die Walze (17) zum Antrieb der Informationsträger andrücken.

10. Analysevorrichtung nach Anspruch 7, dadurch gekennzeichnet, daß der Flügel (83) zur Führung und zur Aufnahme der Informationsträger im Gehäuse der Vorrichtung feststehend montiert ist und daß die drehbaren Rollen (87) in den sie aufnehmenden Aussparungen (86) montiert sind und mit elastischen Elementen (91) zum Andrücken dieser Rollen (87) an die Walze (17) zum Antrieb der Informationsträger zusammenwirken.

11. Analysevorrichtung nach einem der Ansprüche 7 bis 10, dadurch gekennzeichnet, daß über den Rollen (68; 87) Anschlagseinrichtungen (94) angeordnet sind, um die aus der Vorrichtung austretenden Informationsträger (F) abzulenken und sie dadurch an den Flügel (65; 83) zu stapeln.

12. Analysevorrichtung nach einem der Ansprüche 2 bis 11, dadurch gekennzeichnet, daß der Motor (50) zur Drehung der Antriebswalze (17) ein Schrittmotor ist und an einer der Stirnwangen (2) des Gehäuses (1, 2, 3) montiert ist, wobei seine Austrittswelle (49) mit einem mit der Antriebswalze (17) fest verbundenen Ritzel (45) über ein Untersetzungsgetriebe (47) verbunden ist, dessen Austrittsritzel (46) eine Einrichtung (60) aufweist, die eine Bremse zur Dämpfung der vom Elektromotor (50) kommenden Schwingungen bildet.

13. Analysevorrichtung nach einem der Ansprüche 1 bis 12, deren Bildabtaster (115) einen transparenten Schirm (119) zur Übertragung des Lichts einer Lichtquelle (117) zwischen einem von der Quelle beleuchteten Informationsträger und einem Leseelement (122) aufweist, das die Bilder der von dem Träger getragenen Informationen empfängt, wobei der Schirm im Lichtübertragungsbereich mit einem Organ (123) zum Andrücken des Informationsträgers an den Schirm in Kontakt ist und der Bereich des Kontakts zwischen dem Andrückorgan und dem Schirm einen Bereich der Ansammlung von Staub und der Ausbreitung von Farbe oder anderen Produkten darstellt, die die Übertragung des Lichts zum Leseelement behindern können, dadurch gekennzeichnet, daß auf der Oberfläche des Schirms (119) eine eine Verschmutzungsschutzvorrichtung bildende Stufe (132; 136; 140; 141) vorgesehen ist, die den Lichtübertragungsbereich enthält und in der Bewegungsrichtung des Informationsträgers vor dem Kontaktbereich zwischen Schirm und Andrückorgan gelegen ist.

14. Analysevorrichtung nach Anspruch 13, dadurch gekennzeichnet, daß die Stufe (132; 140; 141) geschaffen wird, indem in der Dicke des Werkstoffs des Schirms eine Nut gebildet ist.

15. Analysevorrichtung nach Anspruch 14, dadurch gekennzeichnet, daß die Nut (132) einen stark geneigten Rand (133) und einen leicht geneigten Rand (134) aufweist, der den Lichtübertragungsbereich (120) enthält.

16. Analysevorrichtung nach Anspruch 15, dadurch gekennzeichnet, daß die Nut (132) sich zwischen den Längsrändern des Schirms erstreckt.

17. Analysevorrichtung nach Anspruch 15, dadurch gekennzeichnet, daß die Nut (140) sich längs eines Längsrandes des Schirms (119) erstreckt.

18. Analysevorrichtung nach Anspruch 14, dadurch gekennzeichnet, daß die Stufe (14) geschaffen wird, indem in der Dicke des Werkstoffs des Schirms (119) eine Nut mit jeweils zu den Seitenkanten und den Seiten des Schirms parallelen Rändern gebildet ist.

19. Analysevorrichtung nach Anspruch 13, dadurch gekennzeichnet, daß die Stufe (136) von einer lichtundurchlässigen Abdeckung (135) gebildet ist, die auf der Seite des Schirms (119) befestigt ist, die dem Organ (123) zum Andrücken des Informationsträgers an den Schirm zugewandt ist, wobei diese Abdeckung (135) den Lichtübertragungsbereich (120) und den Bereich des Kontakts mit dem Andrückorgan (123) unbedeckt läßt.

20. Analysevorrichtung nach einem der Ansprüche 1 bis 19, dadurch gekennzeichnet, daß sie eine Vorrichtung zum Schutz der transparenten Wand (216) des Bildabtasters (215) gegen Staub und äußere Teilchen besitzt, die ein auf das Gehäuse des Bildabtasters (215) aufsetzbares Organ (230) zur Führung der Informationsträger aufweist, das eine Reihe von Durchgängen (234) aufweist, die quer zur Bewegungsrichtung der Vorlagen längs des Gehäuses des Bildabtasters (215) angeordnet sind, um das Herabfallen der Staubteilchen längs des Gehäuses des Bildabtasters (215) durch Schwerkraft zu gestatten, bevor sie dessen transparente Wand (216) erreichen.

21. Analysevorrichtung nach Anspruch 20, dadurch gekennzeichnet, daß die Schutzvorrichtung ein Winkelprofilteil (231) aufweist, von dem ein Längsschenkel (232), der dazu bestimmt ist, an eine Wand (235) des Bildabtasters (215), die seiner transparenten Wand (216) benachbart ist, angelegt zu werden, mit Querrippen (233) versehen ist, die diese Durchgänge (34) abgrenzen.

22. Analysevorrichtung nach Anspruch 21, dadurch gekennzeichnet, daß der andere Schenkel (236) des Profilteils (231), der dazu bestimmt ist, an die transparente Wand (216) des Bildabtasters (215) angelegt zu werden, schräge Querrippen (237) aufweist, die sich parallel zur Bewegungsrichtung der Informationsträger erstrecken, um ihre Führung zu gewährleisten, und jeweils eine Querrippe (233) verlängern.

23. Analysevorrichtung nach einem der Ansprüche 21 und 22, dadurch gekennzeichnet, daß die Querrippen (233), die die Durchgänge (234) abgrenzen, Ausschnitte (243) zur Bildung einer Aussparung zur Aufnahme einer gedruckten Schaltung (238) aufweisen, die Organe (239, 240) zur Erfassung des Vorhandenseins von Informationsträgern trägt, wobei mindestens zwei Querrippen mit Einrichtungen (242) zur Befestigung der gedruckten Schaltung an der Vorrichtung versehen sind.

24. Analysevorrichtung nach Anspruch 23, dadurch gekennzeichnet, daß die Einrichtungen zur Befestigung der gedruckten Schaltung (238) Organe (242) zur elastischen Einrastung aufweisen, die mit der Schmalkante der entsprechenden Querrippen (233) aus einem Stück bestehen.

25. Analysevorrichtung nach einem der Ansprüche 22 bis 24, dadurch gekennzeichnet, daß die zur Führung der Vorlagen dienenden Schmalkanten der Rippen (237), die dazu bestimmt sind, mit den Vorlagen in Kontakt zu kommen, ein konvexes, abgerundetes oder zweifach abgeschrägtes Profil aufweisen, das das Herabfallen der Staubteilchen in die Querdurchgänge (234) erleichtert.

26. Analysevorrichtung nach einem der Ansprüche 20 bis 25, dadurch gekennzeichnet, daß ein Tampon (250) zum Absorbieren von Staub und Flüssigkeiten unter den Querdurchgängen (234) angeordnet ist, um die in den Durchgängen herunterfallenden Staubteilchen und Flüssigkeiten aufzufangen.

## Claims

1. Device for the analysis of information supports, notably bulletins or receipts from games comprising means to introduce the support, means to read the information found on the support, means to process the information read on the support in view of their conversion into numerical data and their transmission, reading means comprising an image detector (15; 114; 215) in a lengthened form suspended in a box (1, 2, 3; 201) and with, at its extremities, assembly means (20) which work with additional assembly means (21) planned in the corresponding extremity walls (2, 3) of the box, means to drive the information supports in front of the image detector, comprising a roller (17) and an electric motor (50) to make the roller rotate, the device being characterised in that the said roller (17; 123; 217) is assembled in the walls of the extremity (2, 3) of the box by means of locks (37, 38) and ensure that the image detector is maintained (15; 115; 215) in the said box and in that the elastic organs (23) interposed between the image detector (15) and the box (22) ensure the application of a pressure between the image detector (15; 115; 215) and the roller both in the presence of information supports between the image detector (15; 115; 215) and the roller (17; 213; 217) and when empty.

2. Analysis device according to claim 1 , characterised in that the device box has a section in the form of a wide-mouthed U which is closed at its extremities by flanges (2,3) in plastic material and in that the image detector (15) comprises at its extremities assembly plates (18, 19) fitted with ribs (20) which work with inclined grooves (21) which are fitted in the flanges at the extremity (2,3) of the box, the assembly plates (18, 19) and the inclined grooves (21) forming the additional assembly means for the image detector (15) in the box.

3. Analysis device according to claim 2 characterised in that the roller (17) to drive the information supports comprises axes (29, 30) at its extremities fitted with bearings (31, 32) of which the locks are part (37, 38) and the extremity flanges (2, 3) of the box comprise grooves (33, 34) to house the bearings (31, 32) of the roller and the means (42) to block the locks (37, 38) in the locking position.

4. Analysis device according to one of claims 2 and 3 characterised in that the said elastic means to apply the image detector (15) against the roller (17) are pin springs (23) assembled on catches (24) fitted on the extremity flanges (2, 3) of the box and each having a curved branch (25) which is held against a pion (26) which is solid with the corresponding flange, and destined to come in contact with the edge of the corresponding assembly plate (18, 19) of the image detector (15) to ensure thus that the detector (15) is suspended in the box (1).

5. Analysis device according to one of claims 2 to 4 characterised by the fact that at least one of the bearings (32) of the roller (17) to drive the information supports comprises means (58) which form the brake destined to amortise vibrations to which the roller (17) is subject from the drive means (45, 47, 50).

6. Analysis device according to one of claims 2 to 5 characterised in that each lock (37, 38) of the roller (17) comprises a rod which is solid with a hub (40) which is an integral part of the corresponding bearing (31, 32), the said rod (37, 38) having at its free extremity, blocking means (41) which are complementary to the blocking means (41) planned in the flanges at the extremity (2,3) of the box, whilst the hub (40) comprises flat parts (40a) to introduce the hub in the corresponding groove (33,34) of the said flange, in an unlocked position of the lock, the rods of the lock having an elasticity allowing for the engaging and release of the additional blocking means (41, 42).

7. Analysis device according to claims 2 to 6 characterised in that a flap (65) is also planned assembled in the box (1, 2, 3) and destined for guiding and housing the information supports during and after their passage between the roller (17) and the image detector (15), the flap comprises a longitudinal extra thickness (66) with a concave face (71) in the form of a cylinder portion which is coaxial to the roller (17) and fitted with housing (67) to receive the rotary runners which are regularly distributed over its length.

8. Analysis device according to claim 7 characterised by the fact that the flap (65) oscillates and by the fact that the rotary rollers (68) are assembled in their housing (67) by means of axes (69) engaged immovably, by ratcheting in slots (70) planned on one side and the other of the housing (67).

9. Analysis device according to one of claims 7 and 8, characterised by the fact that the flap (65) is assembled oscillating in the box (1, 2, 3) by means of forks (72) which work with axes (73) planned on the flanges (2, 3) at the extremity of the box, with the interposition of recall springs (74) which provide the application of the rollers (68) against the driver roller (17) for the information supports.

10. Analysis device according to claim 7, characterised by the fact that the guiding and reception flap (83) for the information supports is assembled fixed in the device box and by the fact that the rotary rollers (87) are assembled in their housing (86) and work with elastic organs (91) for the application of the said rollers (87) against the drive roller (17) for the information supports.

11. Analysis device according to one of claims 7 to 10 characterised by the fact that the stopper means (94) are placed above the rollers (68; 87) to deflect the information supports (F) coming from the device and thus ensuring they are piled up against the flap (65, 83)

12. Analysis device according to one of claims 2 to 11 characterised by the fact that the motor (50) to make the drive roller (17) rotate is a step motor and is assembled on one of the flanges at the extremity (2) of the box (1, 2, 3), its output shaft (49) being connected to a pinion (45) solid with the drive roller (17) by the intermediary of a reducer (47) whose outlet pinion (46) comprises means (60) forming a amortisation brake for vibrations coming from the electric motor (50).

13. Analysis device according to one of claims I to 12 whose image detector (115) comprises a transparent screen (119) for the transmission of light from a light source (117) between an information source which is lit up by the source and a reading element (122) receiving the images of the information carried on the support, the screen being in contact in the transmission zone of the light with an organ (123) for the application of the information support against the said screen, the contact zone between the application organ and the screen forming a zone for the accumulation of dust and spreading ink or another product likely to be an obstacle to the transmission of the light to the reading element (122), characterised in that on the surface of the screen (119) is a tier (132; 136; 140; 141) forming an anti-crush device containing the transmission zone for the light and located in front of the contact zone between the screen and the application organ in the direction of the movement of the information support.

14. Analysis device according to claim 13, characterised in that the tier (132; 140; 141) is made by fitting a groove in the thickness of the screen material.

15. Analysis device according to claim 14 characterised in that the groove (132) has an edge (133) with a strong incline and an edge (134) with a slight incline containing the zone (120) for the transmission of light.

16. Analysis device according to claim 15, characterised in that the groove (132) is made between the longitudinal edges of the screen.

17. Analysis device according to claim 15, characterised in that the groove (140) is made along the longitudinal edge of the screen (119).

18. Analysis device according to claim 14, characterised in that the tier (141) is made by fitting in the thickness of the material of the screen (119) a groove with edges which are respectively parallel to the edges and faces of the screen.

19. Analysis device according to claim 13, characterised in that the tier (136) is formed by an opaque mask (135) fixed on the face of the screen (119) turned towards the organ (123) for the application of the information support against the said screen, the said mask (135) leaving the zone (120) for the transmission of light and the zone for contact with the application organ (123) to he discovered.

20. Analysis device according to one of claims 1 to 19, characterised in that it comprises a protection device against dust and external particles for the transparent wall (216) of the image detector (215) comprising an organ (230) to guide the information supports which is adaptable on the image detector (215) box, the said guiding organ comprising a series of passages (234) laid transversely to the direction of the movement of the documents along the image detector (215) box to allow particles of dust to fall by gravity along the image detector (215) box before it reaches the transparent wall (216) of the latter.

21. Analysis device according to claim 20, characterised in that the protection device comprises a profile at right angles (231) whereof a longitudinal wing (232) destined to be applied against a wall (235) of the neighbouring image detector (215) of its transparent wall (216) is fitted with small transverse wings (233) which define the said passages (34).

22. Analysis device according to claim 21, characterised in that the other wing (236) of the profile (231) destined to be applied against the transparent wall (216) of the image detector (215) comprises inclined transverse ribs (237) which extend in parallel to the direction of the movement of the information supports to ensure their guiding, and each being an extension of a transverse wing (233).

23. Analysis device according to one of claims 21 and 22, characterised in that the small transverse wings (233) which define the said passages (234) comprise cuts (243) to form a housing for a printed circuit (238) holding organs (239, 240) detecting the presence of information supports, by means of small transverse wings being fitted with fixing means (242) for the printed circuit, on the device.

24. Analysis device according to claim 23, characterised in that the fixing means for the printed circuit (238) comprise elastic triggering organs (242) from material with the section of the corresponding small transverse wings.

25. Analysis device according to one of claims 22 to 24, characterised in that the rib sections (237) to guide the documents destined to come into contact with the documents have a convex profile (246; 247) which is rounded or with two slopes, facilitating the fall of dust particles into the said transverse passages (234).

26. Analysis device according to one of claims 20 to 25, characterised in that an ahsorption plug (250) for dust and liquids is placed below the transverse passages (234) to receive the dust and liquids falling through the said passages.
